# EUROPEAN PATENT APPLICATION

(11) **EP 2 903 124 A1**
(43) Date of publication of application: **05.08.2015**
(21) Application number: 15152785.0
(22) Date of filing: 28.01.2015
(51) Int. Cl.: H02J 7/00, B60L 11/18, H02J 7/34

(54) **System and method supporting hybrid power/battery scheme**

(30) Priority: 29.01.2014 US 201461932829 P; 25.12.2014 US 201414583112
(71) Applicant: MediaTek, Inc, Hsin-Chu 300 (TW)
(72) Inventor: Chen, Pi-Fen, 302 Hsinchu County, (TW)
(74) Representative: Hoefer & Partner Patentanwälte mbB

(57) **Abstract**

A system (100, 200, 300, 400, 500) consuming energy provided from a battery (105, 205, 305, 405, 505) including a first power source (105A, 205A, 305A, 405A, 505A) and a second power source (105B, 205B, 305B, 405B, 505B). It may include an energy transferring circuit (120, 320, 420, 520). The energy transferring circuit (120, 320, 420, 520) transfers power of at least one of the first and second power sources (105A, 205A, 305A, 405A, 505A, and 105B, 205B, 305B, 405B, 505B) to the other of the first and second power sources (105A, 205A, 305A, 405A, 505A, and 105B, 205B, 305B, 405B, 505B). The first power source (105A, 205A, 305A, 405A, 505A) is arranged to provide power for at least one high dynamic power operation that instantaneously consumes large currents. The second power source (105B, 205B, 305B, 405B, 505B) is arranged to provide power for at least one static/medium power operation. The first power source (105A, 205A, 305A, 405A, 505A) and the second power source (105B, 205B, 305B, 405B, 505B) are supplying the system (100, 200, 300, 400, 500) simultaneously.

## Description

The present invention relates to a power management scheme, and more particularly to system and method capable of supporting a hybrid power/battery scheme according to the characterizing clauses of claims 1, 11, 13, 20, and 22.

Generally speaking, for a currently developed battery cell such as Li-ion cell, there is still a trade-off between high power density characteristic and high energy density characteristic. For example, a battery cell implemented with the high power density characteristic can be used to instantaneously provide or receive a high level of current; however, the battery cells suitable for large current charging/discharging often have lower energy density. Instead, a battery cell implemented with the high energy density characteristic can be used to stably output a medium level of power for a longer period of time; however, in high dynamic power applications, the battery cell cannot output high power instantaneously. It becomes more difficult to design/configure characteristics of battery(s) of an electronic device such as a portable device since the electronic device may be arranged to execute different applications/operations corresponding to different loadings. For example, some applications/loadings may need to instantaneously consume a higher level of power to achieve high performance while some applications/loadings may consume a static/medium power for long time. Accordingly, it is important to provide a novel power source management scheme for different applications/loadings.

This in mind, the present invention aims at providing methods and systems capable of supporting high performance applications while keeping long standby time of normal usage.

This is achieved by systems according to claims 1, 11, methods for applied the systems according to claims 13, 20, and a battery for providing energy for the systems according to claim 22. The dependent claims pertain to corresponding further developments and improvements.

As will be seen more clearly from the detailed description following below, in one embodiment, the claimed system consuming energy provided from a battery includes a first power source and a second power source is disclosed. The system includes an energy transferring circuit. The energy transferring circuit is coupled to the battery and used for transferring power of at least one of the first and second power sources to the other of the first and second power sources. The first power source is arranged to provide power for at least one high power operation that instantaneously consumes high current. The second power source is arranged to provide power for at least one low/medium power operation that does not consume high dynamic power. The first power source and the second power source are supplying the system simultaneously.

In another embodiment, the claimed system consuming energy provided from a battery includes a first power source and a second power source is disclosed. The system includes a power selecting circuit. The power selecting circuit is coupled to the battery and used for selecting one of the first and second power sources to provide power for at least one low/medium power operation, and selecting the other one of the first and second power sources to provide power for at least one high power operation. The first power source and the second power source are supplying the system simultaneously.

Another embodiment of the invention is a method applied to a system consuming energy provided from a battery including a first power source and a second power source is disclosed. The method includes the steps: using the first power source to provide power for at least one high power operation that instantaneously consumes high power; using the second power source to provide power for at least one low/medium power operation that does not consume high dynamic power; and transferring power of at least one of the first and second power sources to the other of the first and second power sources; wherein the first power source and the second power source are supplying the system simultaneously.

In another embodiment, a method applied to the claimed system consuming energy provided from a battery including a first power source and a second power source is disclosed. The method includes the steps: selecting one of the first and second power sources to provide power for at least one low/medium power operation; and selecting the other one of the first and second power sources to provide power for at least one high power operation; wherein the first power source and the second power source are supplying the system simultaneously.

Further, another embodiment of the invention is the claimed battery for providing energy for the claimed systems is disclosed. The battery includes a first power source and a second power source. The first power source is used for providing power for at least one high power operation that instantaneously consumes high power. The second power source is coupled to the first power source and used for providing power for at least one low/medium power operation that does not instantaneously consume high dynamic power. The first power source and the second power source are supplying power for the system simultaneously.

The claimed systems are capable of supporting a hybrid battery/power scheme. The claimed systems can support high performance operations/applications and achieve a longer standby time simultaneously. The claimed systems support two or more different types of batteries so as to effectively improve overall system efficiency as well as thermal risk.

In the following, the invention is further illustrated by way of example, taking reference to the accompanying drawings. Thereof
FIG. 1 is a diagram of a system supporting a hybrid power/battery scheme according to a first embodiment of the invention;
FIG. 2 is a diagram of a system supporting a hybrid power/battery scheme according to a second embodiment of the invention;
FIG. 3 is a diagram of a system supporting a hybrid power/battery scheme according to a third embodiment of the invention;
FIG. 4 is a diagram of a system supporting a hybrid power/battery scheme according to a fourth embodiment of the invention; and
FIG. 5 is a diagram of a system supporting a hybrid power/battery scheme according to a fifth embodiment of the invention.

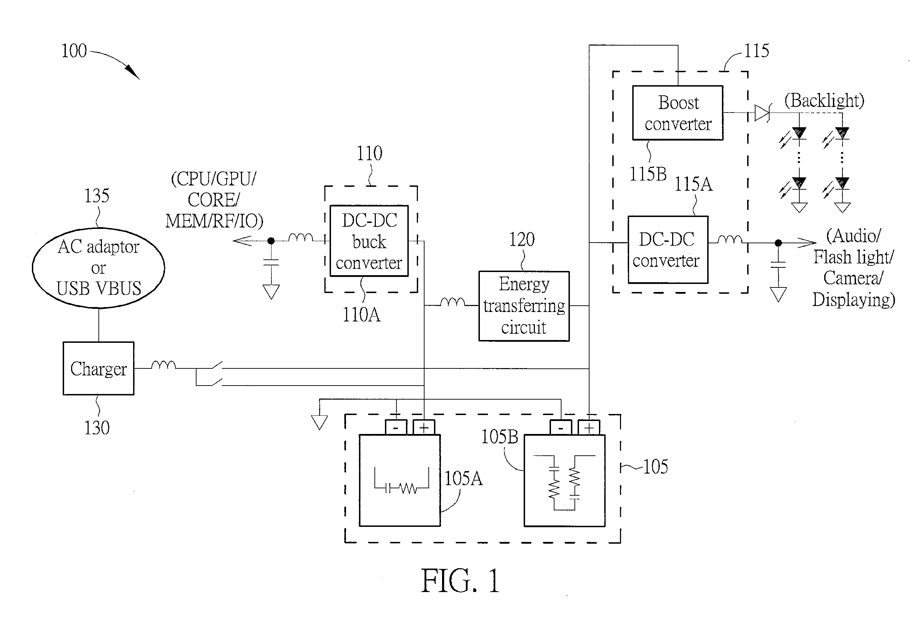

Please refer to FIG. 1, which is a diagram of a system 100 supporting a hybrid power/battery scheme according to a first embodiment of the invention. The hybrid power/battery scheme is at least capable of providing power/energy of power sources corresponding to different characteristics for different applications/operations of a portable device, supplementing power/energy between the different power sources, and/or appropriately charging the different power sources if the power sources are rechargeable. By the hybrid power/battery scheme, the system 100 can instantaneously output higher current (i.e. deliver higher power) and higher voltage with better converter efficiency. Thus, it achieves good system dynamic performance while keeping long operation/standby time with improved system efficiency.

In practice, the system 100 comprises a battery 105, at least one first power outputting circuit 110, at least one second power outputting circuit 115, an energy transferring circuit 120, and a charging circuit 130. The battery 105 comprises a first power source 105A and a second power source 105B that is different and distinct from the first power source 105A. The first power source 105A and second power source 105B respectively correspond to different power characteristics. The first power source 105A and second power source 105B may respectively include different numbers of battery cells. For example, the first power source 105A may comprise a single battery cell while the second power source 105B may comprise a plurality of battery cells connected in series. In this condition, the first power source 105A and second power source 105B respectively correspond to different output voltage levels. For instance, the first power source 105A including a single battery cell may output/provide a level of 4Volts, and the second power source 105B including two battery cells connected in series may output/provide a level of 8Volts. The first power source 105A supplies a lower voltage level while the second power source 105B supplies a higher voltage level. The first power source 105A and second power source 105B may correspond to different C-rates (charge/discharge rate) or other different characteristics. This is not intended to be a limitation of the invention.

The first power source 105A including a battery cell is configured to provide energy/power via the first power outputting circuit 110 (e.g. a buck converter) for applications/operations that consume high dynamic power. The first power outputting circuit 110 may comprise at least one DC-DC buck converter 110A used for converting the voltage of the first power source 105A to provide/output a first voltage for supplying power for at least one operation/application which instantaneously needs more power; the at least one operation/application for example may include CPU operation(s), GPU operation(s), Core operations, memory (MEM) operations, RF operations, I/O operations. The first power source 105A (a single cell) provides a lower voltage level such as 4Volts; it's suitable for the DC-DC buck converter to convert input voltage (e.g. 4Volts) for supplying power (e.g. 1 Volts) for a system-on-chip (SOC) circuit with good efficiency.

The second power source 105B including battery cells connected in series is configured to provide energy/power via the second power outputting circuit 115 (comprising a DC-DC converter 115A and/or a boost converter 115B) for applications/operations that need higher supply voltage or consume static power. The second power outputting circuit 115 may comprise at least one of DC-DC converter 115A and DC-DC boost converter 115B that are used for converting the voltage of second power source 105B to provide/output a second voltage for supplying power for at least one operation which needs higher supply voltage (e.g. 32Volts). For example, the at least one operation may comprise a backlight driving operation and/or audio/flash light/camera/displaying driving operation. In an embodiment, the second power outputting circuit 115 includes the boost converter 115B for stepping up the voltage of the second power source 105B to generate a higher voltage level such as a level of 32Volts for driving backlight units. Compared to a conventional scheme, employing the boost converter 115B to implement the second power outputting circuit 115 for driving the backlight modules can improve the efficiency of power supplying since of a lower ratio of output voltage to input voltage. Accordingly, this can save power. In another embodiment, the second power outputting circuit 115 includes the DC-DC converter 115A for stepping down the level of the second power source 105B to generate a slightly lower voltage level for the application of audio/flash light/camera/display. For example, if the second power source 105B is arranged to output a level of 8Volts, the DC-DC converter 115A can be used to output a level of 5Volts for the application of audio/flash light/camera/display. It should be noted that the voltage level provided by second power source 105B is not limited by 8Volts. In another embodiment, the voltage level provided by second power source 105B may be configured as another different level. Compared to a conventional scheme employing a buck-boost converter or a bypass-boost converter, employing the DC-DC converter 115A to implement the second power outputting circuit 115 for audio/flash light/camera/display applications can improve the efficiency of power delivering path and simultaneously lower down circuit costs. Additionally, for outputting the same level of power, the second power source 105B comprising two battery cells connected in series merely outputs lower current because of its higher voltage, and this can effectively reduce power/heat losses that come from parasitic resistances on the power delivery path.

Thus, by using power sources having different characteristics to output/supply power for different applications/operations, this can optimize overall power and energy efficiency for the system 100. For example, if the system 100 is installed within a mobile device, this enables that the mobile device can consume more dynamic power to achieve higher performance application(s) while maximizing useable range of battery energy. Therefore, using more than one power sources can optimize the system performance and efficiency easily without tradeoff. In addition, it is safer to use two or more battery cells to output/supply power for a portable electronic device rather than using a single battery cell having the same total capacity.

The energy transferring circuit 120 comprises two operation modes. Under a first operation mode, the energy transferring circuit 120 operates as a DC-DC buck converter to dynamically transfer energy from the second power source 105B to the first power source 105A. Under a second operation mode, the energy transferring circuit 120 operates as a DC-DC boost converter to transfer power from the first power source 105A to the second power source 105B by merely adjusting a Pulse-Width-Modulation (PWM) control signal without employing additional power switches. Accordingly, in an embodiment, it is possible to use an adaptor being capable of outputting a level of 5Volts to supply energy or charge the two power sources 105A and 105B included within the system 100. In another embodiment, adaptors for outputting/supplying different levels can be applied into the system 100. That is, the system 100 is able to support a wide input voltage range for external adaptors.

The energy transferring circuit 120 is arranged for transferring energy of first power source 105A to the second power source 105B to supplement energy for the second power source 105B and/or transferring energy of second power source 105B to the first power source 105A to supplement energy for the first power source 105A. By energy transferring, the system 100 can appropriately supplement energy for a power source such as a battery cell that has been empty by using another power source. Specifically, the energy transferring circuit 120 can be implemented by using a bi-directional DC-DC converter. For instance, if the first power source 105A includes a single battery cell and the second power source includes two battery cells connected in series (as shown in FIG. 1), the bi-directional DC-DC converter is arranged for charging the single battery cell included within first power source 105A by stepping down (buck conversion) the voltage of the two battery cells connected in series, and the bi-directional DC-DC converter is arranged for charging the two battery cells included within second power source 105B by stepping up (boost conversion) the voltage of the single battery cell included within first power source 105A. That is, the energy transferring circuit 120 can flexibly supplement energy between different power sources if the power sources are rechargeable. Equivalently, flexible energy allocation can be achieved by the energy transferring circuit 120.

For the system 100, applications requiring different voltage or current profiles can obtain power/energy from different power sources respectively. For example, the CPU/GPU/multi-core applications can consume power or energy from the first power source 105A such as a high power density power source which can deliver high power instantaneously, and the backlight, audio, flash light, camera, or display applications can consume power or energy from the second power source 105B such as a high energy power source. Since the CPU/GPU/multi-core applications reflect the system performance while the backlight, audio, flash light, camera, or display applications are commonly used in daily usage, the system 100 is capable of supporting high performance system (e.g. multi-core system) and achieving longer stand-by time simultaneously.

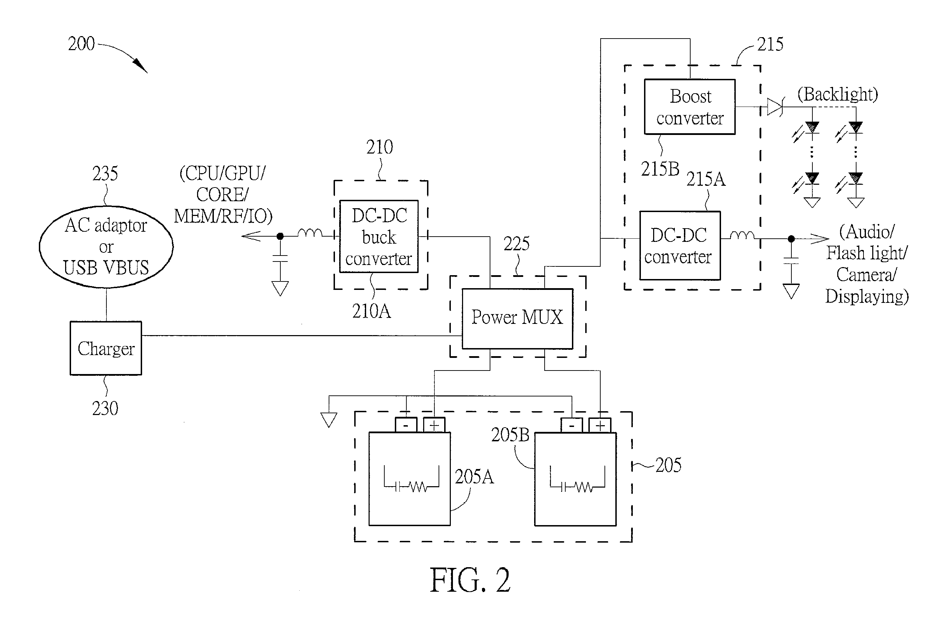

Please refer to FIG. 2, which is a diagram of a system 200 supporting a hybrid power/battery scheme according to a second embodiment of the invention. By the hybrid power/battery scheme, the system 200 can support high dynamic power (i.e. deliver high power instantaneously) and achieve a longer stand-by time. Thus, it is not required to frequently charge the power sources if the power sources are rechargeable. The system 200 comprises a battery 205, at least one first power outputting circuit 210, at least one second power outputting circuit 215, a power selecting circuit 225, and a charger 230. The battery 205 comprises a first power source 205A and a second power source 205B that is different and distinct from the first power source 205A. The first power source 205A and second power source 205B respectively correspond to different characteristics. For example, the first power source 205A may include a high power density battery cell while the second power source 205B may include a high energy density battery cell. The first power source 205A and second power source 205B respectively correspond to different C-rates (i.e. charge/discharge rates). The high power density battery cell included with the first power source 205A can be used to output high power, and the high energy density battery cell included within the second power source 205B is used to sustain longer usage. However, this is not intended to be a limitation of the invention. In addition, in this embodiment, battery cells included within the first power source 205A and second power source 205B are rechargeable. However, this is not intended to be a limitation of the invention.

The high power density battery cell is configured to include a lower direct current internal resistance (DCIR) such as 100mOhm. As shown in FIG. 2, the first power source 205A is configured to provide energy/power via the first power outputting circuit 210 (e.g. a buck converter) for applications/operations that instantaneously consume high power. The first power outputting circuit 210 may comprise at least one DC-DC buck converter 210A used for converting the voltage of the first power source 205A to provide/output a first voltage for supplying power for at least one operation/application which instantaneously needs more currents; the at least one operation/application for example may include CPU operation(s), GPU operation(s), Core operations, memory operations, RF operations, I/O operations. The first power source 205A provides a single-cell battery level such as 4Volts; the power loss/heat dissipation occurs within the battery cell is lower due to its lower DCIR characteristics. This can avoid undesired energy loss. In addition, lower IR drop occurs on the battery power delivery path, and this maximizes the useable range of battery cell so as to utilize the energy stored in the battery cell more completely.

The high energy density battery cell usually includes a higher direct current internal resistance. As shown in FIG. 2, the second power source 205B is configured to provide energy/power via the second power outputting circuit 215 (comprising a buck/boost/buck-boost/bypass-boost converter 215A and/or a boost converter 215B) for the applications/operations that do not require high dynamic power range. The second power outputting circuit 215 may comprise at least one of DC-DC buck/boost/buck-boost/bypass-boost converter 215B and DC-DC boost converter 215A that are used for converting the voltage of second power source 205B to provide/output a second voltage for supplying power for at least one operation which does not require high dynamic power range. For example, the at least one operation may comprise a backlight driving operation and/or audio/flash light/camera/displaying driving operation. In an embodiment, the second power outputting circuit 215 includes the boost converter 215B for stepping up the voltage of the second power source 205B to generate a higher voltage level for driving backlight units. In another embodiment, the second power outputting circuit 215 includes a DC-DC buck-boost converter 215A for stepping down/up the level of the second power source 205B to generate a lower/higher voltage level for the application of audio/flash light/camera/display. For example, if the second power source 205B is arranged to output a level of 4Volts, the DC-DC buck-boost converter 215A can be used to output a level of 5Volts for the application of more than 1Watt speaker output. It should be noted that the voltage level provided by second power source 205B is not limited by 4Volts. It depends on the electrochemical characteristics of the battery cell used. Therefore, the type of DC-DC converter 215A varies accordingly on the applications it supports.

For energy/power path selection, the power selecting circuit 225 respectively and dynamically selects different power delivery paths for different applications/operations that consume different levels of power. For example, initially the power selecting circuit 225 switches and selects the first power source 205A to transmit power/energy to the first power outputting circuit 210, and selects the second power source 205B to transmit power/energy to the second power outputting circuit 215. In other situations, the power selecting circuit 225 may switch and select the second power source 205B to provide power/energy to the first power outputting circuit 210 if the first power source 205A is empty and cannot provide energy/power. The power selecting circuit 225 may switch and select the first power source 205A to provide power/energy to the second power outputting circuit 215 if the second power source 205B is empty and cannot provide energy/power. The power selecting circuit 225 can be regarded as a power multiplexer. In practice, the power selecting circuit 225 can be implemented by using a plurality of switch units.

In addition, the power selecting circuit 225 is further responsible for flexibly directing a charging current to the first power source 205A or second power source 205B so as to charge the high power density battery cell in the first power source 205A or the high energy density battery cell in the second power source 205B. In an embodiment, it is possible to use an adaptor being capable of outputting a level of 5Volts to supply energy or charge the two power sources 205A and 205B included within the system 200. In another embodiment, adaptors for outputting/supplying different levels can be applied into the system 200 and charge the power source 205A or 205B via the charger 230.

For the system 200, applications requiring different voltage/current profiles can obtain power/energy from different power sources respectively. For example, the CPU/GPU/multi-core applications can consume power or energy from the first power source 205A such as a high power density power source, and the backlight, audio, flash light, camera, or display applications can consume power or energy from the second power source 205B such as a high energy power source. Since the CPU/GPU/multi-core applications need high power source to obtain high performance while the backlight, audio, flash light, camera, or display applications need high energy source for daily usage, the system 200 is capable of supporting high power applications/operations and achieving longer stand-by time simultaneously.

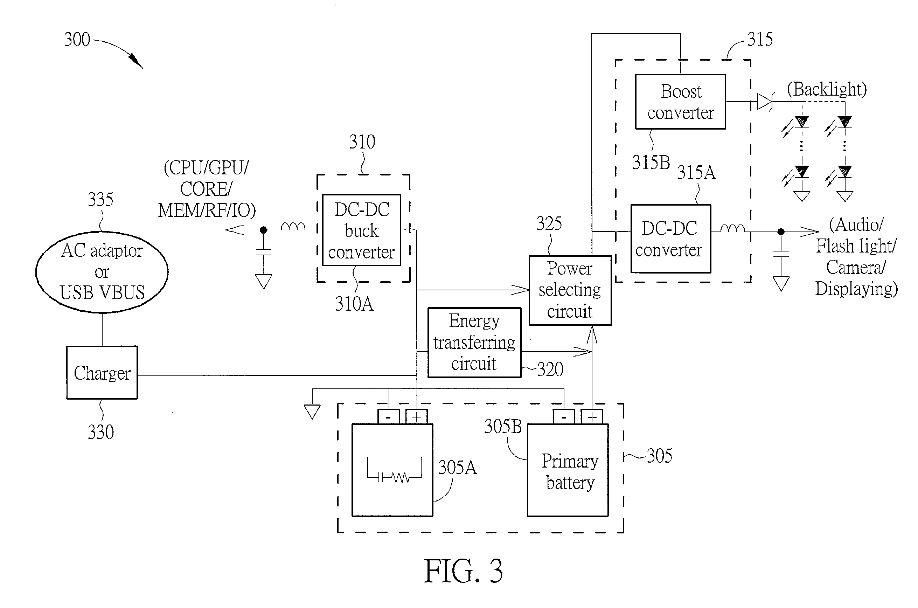

Please refer to FIG. 3, which is a diagram of a system 300 supporting a hybrid power/battery scheme according to a third embodiment of the invention. By the hybrid power/battery scheme, the system 300 can support high dynamic power requested by processors (e.g. CPU/multi-cores) while keeping long stand-by time. The system 300 comprises a battery 305, at least one first power outputting circuit 310, at least one second power outputting circuit 315, a backup charger 320, a power conditioning and selecting circuit 325, and a charger 330. The battery 305 comprises a first power source 305A and a second power source 305B that is different and distinct from the first power source 305A. The first power source 305A and second power source 305B respectively correspond to different characteristics. For example, in this embodiment, the first power source 305A may include a rechargeable battery cell while the second power source 305B may include a primary battery cell such as fuel cells, solar cells, and so on. The rechargeable battery cell included within the first power source 305A may be designed to be a high power density secondary battery cell, and the primary battery cell included within the second power source 305B may be designed to be a high capacity battery cell or energy harvest cells (e.g. solar cells). However, this is not intended to be a limitation of the invention.

The rechargeable cell implemented by high power density battery cell is configured to include a low direct current internal resistance (DCIR) (e.g. smaller than 100mOhm). As shown in FIG. 3, the first power source 305A is configured to provide energy/power via the first power outputting circuit 310 (e.g. a buck converter 310A) for applications/operations that instantaneously consume high power. Because of the low DCIR characteristics of the battery cell 305A, the voltage drop (IR drop) from the battery cell to the first power output circuit 310 is lower. That prevents system from abnormal shutdown when the load (e.g. CPU/multi-cores) draws large current. In other words, it maximizes the usable range of battery cell so as to utilize the energy stored in the battery cell more completely. In addition, the lower direct current internal resistance within the battery cell causes lower power loss/heat in the battery pack. It improves safety when high power operation.

The second power source 305B is implemented by a primary battery cell so that it can be the power tank of the system 300. The second power source 305B is configured to provide energy/power via the second power outputting circuit 315 (comprising a buck/boost/buck-boost/bypass-boost converter 315A and/or a boost converter 315B) for applications/operations which do not require large dynamic power range. Since the second power source 305B can be any primary cells or energy harvest cells, the output voltage of power source 305B may not compatible to the input range of the second power outputting circuit 315. In addition, the output energy of power source 305B may not be as stable as that provided by the general secondary battery cell if the energy is harvested from ambient. The power conditioning and selecting circuit 325 can help to adjust the power source from 305B. However, this function is optional and mainly depends on the cell type selection of 305B. Besides, in case of exhausted energy in 305B, the power conditioning and selecting circuit 325 can switch the power source to 305A to supply the second power outputting circuit 315.

In this embodiment, the power selecting circuit 325 may select the first power source 305A (i.e. the high power density battery cell) to provide power to the second power outputting circuit 315 or instead may select the second power source 305B (i.e. the fuel battery cell) to provide power to the second power outputting circuit 315. The power selecting circuit 325 can be regarded as power multiplexer that can be implemented by using a plurality of switch units. For example, the power selecting circuit 325 switches and selects the first power source 305A to provide power to the second power outputting circuit 315. Specifically, the second power outputting circuit 315 may comprise at least one of DC-to-DC buck converter and DC-to-DC boost converter that are used for converting the voltage of either the second power source 305B or the first power source 305A to provide a voltage for supplying power for at least one operation which may averagely consume a stable level of power. The at least one operation for example may comprise a backlight driving operation or audio/flash light/camera/displaying driving operation. For instance, the second power outputting circuit 315 includes a boost converter for stepping up the voltage of second power source 305B or the voltage of first power source 305A to generate a higher voltage level such as a level of 32Volts for driving backlight units. In addition, the second power outputting circuit 315 may include a DC-DC buck converter. Thus, the power selecting circuit 325 is capable of providing a function of flexible power source selection.

The backup charger 320 is arranged to transfer energy from the second power source 305B (i.e. primary battery cell) to the first power source 305A (i.e. rechargeable battery cell) to dynamically supplement energy to the first power source 305A. The backup charger 320 can be implemented by using a switching or linear type DC-DC converter. However, this is not intended to be a limitation of the invention.

For the system 300, applications requiring different dynamic power can obtain power/energy from different power sources respectively. For example, the CPU/GPU/multi-core applications can consume power or energy from the first power source 305A such as a high power density power source, and the backlight, audio, flash light, camera, or display applications can consume power or energy from the second power source 305B such as a high energy power source. Since the CPU/GPU/multi-core applications can obtain higher dynamic power while another energy tank can supply the backlight, audio, flash light, camera, or display applications, the system 300 is capable of supporting high power applications/operations and achieving longer stand-by time simultaneously.

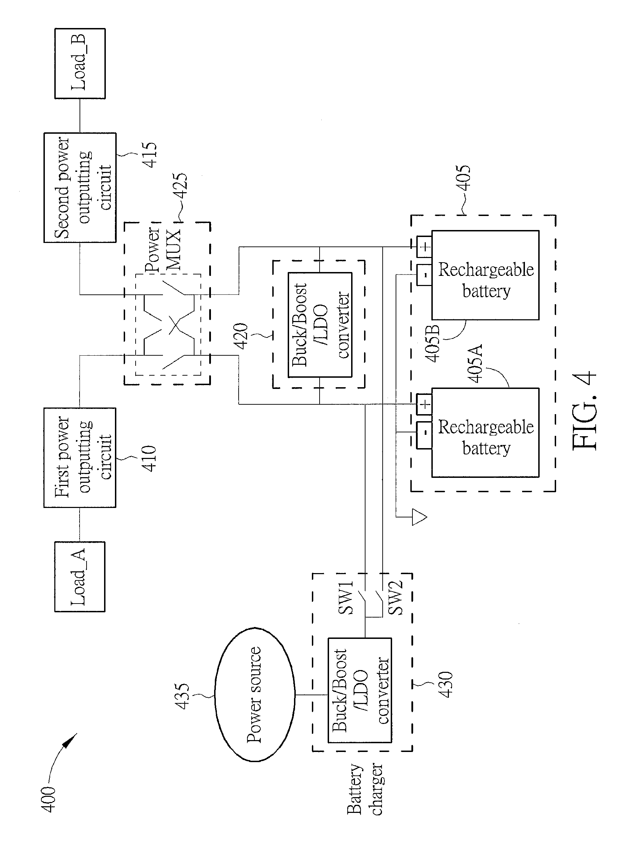

Please refer to FIG. 4, which is a diagram of a system 400 supporting a hybrid power/battery scheme according to a fourth embodiment of the invention. By the hybrid power/battery scheme, the system 400 can support operations of high performance processors and long normal operation time without tradeoff. Thus, for a mobile device like smartphone with multi-core, it is not required to frequently charge the power sources if the power sources are rechargeable. In practice, the system 400 comprises a battery 405, at least one first power outputting circuit 410, at least one second power outputting circuit 415, an energy transferring circuit 420 (e.g. buck/boost/LDO circuit), a power selecting circuit 425 (e.g. power multiplexer), and a battery charger 430 (including buck/boost/LDO circuit and optional switches SW1 and SW2).

The battery 405 comprises a first power source 405A and a second power source 405B that is different and distinct from the first power source 405A. The first power source 405A and second power source 405B respectively correspond to different characteristics. For example, the first power source 405A and second power source 405B may correspond to different output voltage levels, different C-rates (charge/discharge rates), and/or different electrochemical characteristics. In this embodiment, the first power source 405A and second power source 405B are rechargeable battery cells and may respectively correspond to different output voltage levels, different C-rates, or different types of battery cells. However, this is not intended to be a limitation of the invention.

For example, the first power source 405A may include a high power density battery cell, and the second power source 405B may include a high energy density battery cell. The high power density battery cell is configured to include a lower direct current internal resistance (DCIR) such as 100mOhm. As shown in FIG. 4, for example, the first power source 405A can be configured to provide energy/power via the first power outputting circuit 410 (e.g. a buck converter) for the loading Load_A. Since the first power source 405A is a high power density cell, the loading Load_A can be high performance/power functions. The lower direct current internal resistance causes lower IR drop on the power delivery path. This maximizes the useable range of the battery cell so as to utilize the energy stored in the battery cell more completely. Additionally, the high energy density battery cell is suitable to supply loadings with static/medium power. As shown in FIG. 4, for example, the second power source 405B can be configured to provide energy/power via the second power outputting circuit 415 (comprising a buck/boost converter and/or a boost converter) for the different loading Load_B.

For energy/power delivery path selection, the power selecting circuit 425 respectively and dynamically selects different power paths for different loadings Load_A and Load_B that consume different levels of power. For example, the power selecting circuit 425 may initially select the first power source 405A to provide power/energy to the first power outputting circuit 410 so as to provide power for loading Load_A, and may select the second power source 405B to provide power/energy to the second power outputting circuit 415 so as to provide power for loading Load_B. The operations and functions of first power outputting circuit 410 and second power outputting circuit 415 are similar to those of first power outputting circuit 110 and second power outputting circuit 115, and are not detailed for brevity. Additionally, in other situations, the power selecting circuit 425 may switch to select different power sources to provide powers. The power selecting circuit 425 may select the second power source 405B to provide power/energy to the first power outputting circuit 410 if the first power source 405A is empty. The power selecting circuit 425 may select the first power source 405A to provide power/energy to the second power outputting circuit 415 if the second power source 405B is empty. The power selecting circuit 425 can be regarded as a power multiplexer. In practice, the power selecting circuit 425 can be implemented by using a plurality of switch units.

The energy transferring circuit 420 includes two operation modes. Under a first operation mode, the energy transferring circuit 420 is arranged for transferring energy from the first power source 405A to the second power source 405B. For example, when the second power source 405B is empty and is not being charged by an external charger, the energy transferring circuit 420 is arranged to transfer energy from first power source 405A to second power source 405B so as to supplement energy for the second power source 405B. Under a second operation mode, the energy transferring circuit 420 is arranged for transferring energy from the second power source 405B to the first power source 405A. For example, when the first power source 405A is empty and is not being charged by an external charger, the energy transferring circuit 420 is arranged to transfer energy so as to supplement energy for the first power source 405A. In addition, the energy transferring circuit 420 can be arranged to transfer energy from the first power source 405A to the second power source 405B upon system's request (e.g. once energy of second power source 405B is lower than that of first power source 405A). The energy transferring circuit 420 can also transfer energy from the second power source 405B to the first power source 405A upon system's request (e.g. once energy of first power source 405A is lower than that of second power source 405B). In addition, the energy transferring circuit 420 can operate once an external battery charger is charging to one of the power sources 405A and 405B. The energy transferring circuit 420 can be configured to operate upon system's request to transfer the energy in the power source under charging to the others (e.g. when the stage of charge for a power source is under a specified threshold and the stage of charge for another power source is above another specified threshold). That is, the energy transferring circuit 420 can perform runtime charge balancing or supplementing. In practice, the energy transferring circuit 420 can be implemented by using a buck/boost/LDO converter, analog switch unit(s) with current/voltage limit, and/or inductor unit(s) with PWM control scheme.

For the system 400, different loadings requiring different power/current levels can obtain power/energy from different power sources respectively. For example, the CPU application or multi-core calculation application can consume power or energy from the first power source 405A such as a high power density power source, and the backlight, audio, flash light, camera, or display applications can consume power or energy from the second power source 405B such as a high energy power source. Since the CPU application or multi-core application can obtain higher power while static power can be provided for the backlight, audio, flash light, camera, or display applications, the system 400 is capable of supporting high power applications/operations and achieving longer stand-by time simultaneously.

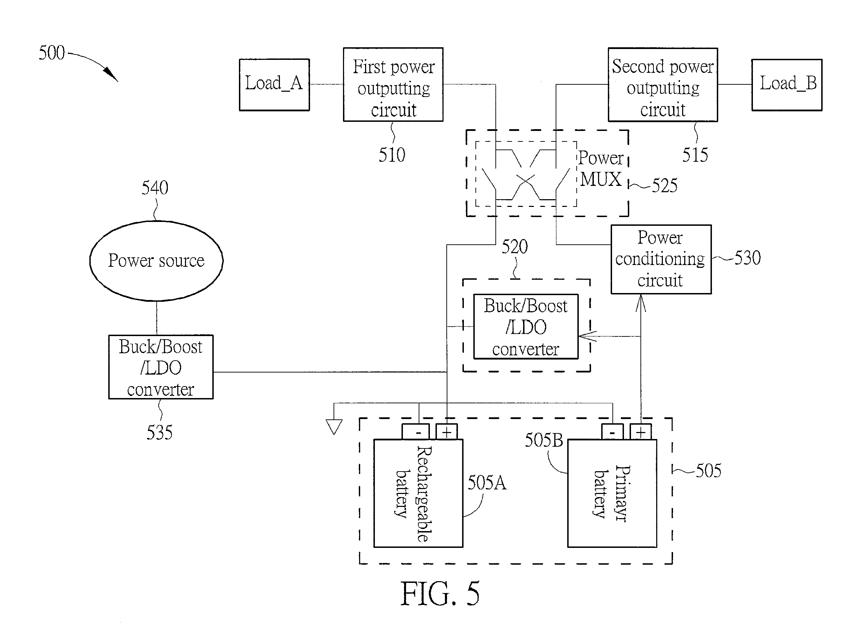

Please refer to FIG. 5, which is a diagram of a system 500 supporting a hybrid power/battery scheme according to a fifth embodiment of the invention. By the hybrid power/battery scheme, the system 500 can instantaneously output higher current (i.e. deliver higher power) and achieve a longer stand-by time. Thus, for a mobile device like smartphone with multi-core, it is not required to frequently charge the power sources if the power sources are rechargeable/changeable. In practice, the system 500 comprises a battery 505, at least one first power outputting circuit 510, at least one second power outputting circuit 515, a backup charger 520, a power selecting circuit 525, and a power conditioning circuit 530, and an optional charger 535 (e.g. buck/boost/LDO converter). The battery 505 comprises a first power source 505A and a second power source 505B that is different and distinct from the first power source 505A. The first power source 505A and second power source 505B respectively correspond to different characteristics. For example, the first power source 505A may include a rechargeable battery cell while the second power source 505B may include a primary battery cell such as a fuel cell. The first power source 505A and second power source 505B respectively correspond to a secondary battery cell (a rechargeable battery cell) and a primary battery cell (an un-rechargeable battery cell). However, this is not intended to be a limitation of the invention.

In this example, the un-rechargeable battery cell such as a currently developed fuel cell is designed to be a high energy density battery cell, and the rechargeable battery cell is designed to be a high power density battery cell; however, this is not intended to be a limitation of the invention. The high power density battery cell is configured to include a lower direct current internal resistance (DCIR) such as 100mOhm. The high energy density battery cell has higher capacity and is suitable to supply loadings with static/medium power. As shown in FIG. 5, the first power source 505A may be configured to provide energy/power via the first power outputting circuit 510 for the loading (e.g. Load_A). The second power source 505B may be configured to provide energy/power via the second power outputting circuit 515 for the other loading (e.g. Load_B). Instead, the first power source 505A initially may be configured to provide energy/power for loading Load_B, and the second power source 505B initially may be configured to provide energy/power for loading Load_A; this is not intended to be a limitation of the invention.

For energy/power path selection, the power selecting circuit 525 is arranged for dynamically switching and selecting different power paths for different loadings Load_A and Load_B. For example, if the first power source 505A initially provides energy/power for Load_A and the second power source 505B initially provides energy/power for Load_B, the power selecting circuit 525 can switch the power paths so that the first power source 505A provides energy/power for Load_B and the second power source 505B provides energy/power for Load_A. Instead, if the first power source 505A initially provides energy/power for Load_B and the second power source 505B initially provides energy/power for Load_A, the power selecting circuit 525 can switch the power paths so that the first power source 505A provides energy/power for Load_A and the second power source 505B provides energy/power for Load_B. In addition, for a single loading such as Load_A, the power selecting circuit 525 can also disconnect the power delivery path between the first power outputting circuit 510 and first power source 505A, and can also connect the power delivery path between the first power outputting circuit 510 and second power source 505B. This operation can be appropriately applied for the single loading Load_B. The power selecting circuit 525 can be regarded as power multiplexer that can be implemented by using a plurality of switch units. The power selecting circuit 525 is capable of providing a function of flexible power source selection.

The backup charger 520 is arranged to transfer energy from the second power source 505B (i.e. a primary battery cell) to the first power source 505A (i.e. a rechargeable battery cell) to dynamically supplement energy for the first power source 505A. The backup charger 520 can be implemented by using a linear or switching type converter depends on the characteristics of the power source 505B and 505A. The backup charger 520 can be regarded as an energy transferring circuit to transfer energy from the primary cell 505B to the secondary battery cell 505A (e.g. primary cells can be solar cells, fuel cells, or any energy harvest cells). However, this is not intended to be a limitation of the invention. The power conditioning circuit 530 is arranged to convert the output voltage of second power source 505B to generate a voltage level that is fitted with the requirement of loading Load_A or loading Load_B. The power conditioning circuit 530 may be optional and depends on the electrical characteristics of the primary cells. This is not intended to be a limitation of the invention.

For the system 500, loadings requiring different power levels can obtain power/energy from different power sources respectively. For example, loadings associated with CPU application or multi-core calculation application can consume power or energy from the first power source 505A such as a high power density power source, and loadings associated with backlight, audio, flash light, camera, or display applications can consume power or energy from the second power source 505B such as a backup energy tank or a renewable power source. Since the CPU application or multi-core calculation application can obtain higher power from the first power source 505A while static/medium power can be provided for the backlight, audio, flash light, camera, or display applications, the system 500 is capable of supporting high power applications/operations and achieving longer stand-by time simultaneously.

All combinations and sub-combinations of the above-described features also belong to the invention.

## Claims

1. A system (100, 300, 400, 500) consuming energy provided from a battery (105, 305, 405, 505) including a first power source (105A, 305A, 405A, 505A) and a second power source (105B, 305B, 405B, 505B), **characterized by**:
an energy transferring circuit (120, 320, 420, 520), coupled to the battery (105, 305, 405, 505), for transferring power of at least one of the first and second power sources (105A, 305A, 405A, 505A, and 105B, 305B, 405B, 505B) to the other of the first and second power sources (105A, 305A, 405A, 505A, and 105B, 305B, 405B, 505B);
wherein the first power source (105A, 305A, 405A, 505A) is arranged to provide power for at least one high power operation that instantaneously consumes power; the second power source (105B, 305B, 405B, 505B) is arranged to provide power for at least one low/medium power operation that does not consume high dynamic power; and, the first power source (105A, 305A, 405A, 505A) and the second power source (105B, 305B, 405B, 505B) are used for supplying the system (100, 300, 400, 500) simultaneously.

2. The system (400, 500) of claim 1, **characterized in that** the energy transferring circuit (420, 520) comprises a buck-boost converter used for executing one operation of:
stepping down the voltage of the second power source (405B, 505B) to the level of the first power source (405A, 505A) to transfer energy of the second power source (405B, 505B) to the first power source (405A, 505A); or
stepping up the voltage of the first power source (405A, 505A) to the level of the second power source (405B, 505B) to transfer energy of the first power source (405A, 505A) to the second power source (405B, 505B).

3. The system (100, 300, 400, 500) of claim 1, further **characterized by**:
at least one first power outputting circuit (110, 310, 410, 510), coupled to the first power source (105A, 305A, 405A, 505A), for converting a voltage of the first power source (105A, 305A, 405A, 505A) to provide a first voltage for the at least one high power operation; and
at least one second power outputting circuit (115, 315, 415, 515), coupled to the second power source (105B, 305B, 405B, 505B), for converting a voltage of the second power source (105B, 305B, 405B, 505B) to provide a second voltage for the at least one low/medium power operation;
wherein the second voltage is higher than the first voltage.

4. The system (100, 300, 400, 500) of claim 3, **characterized in that** the voltage of the second power source (105B, 305B, 405B, 505B) is a multiple of the voltage of the first power source (105A, 305A, 405A, 505A).

5. The system (100, 300, 400, 500) of claim 3, **characterized in that** the first power source (105A, 305A, 405A, 505A) corresponds to high power density characteristic, and the second power source (105B, 305B, 405B, 505B) corresponds to high energy density characteristic.

6. The system (100, 300) of claim 3, **characterized in that** the at least one first power outputting circuit (110, 310) comprises a buck converter (110A, 310A), and the at least one second power outputting circuit (115, 315) comprises at least one of a buck converter and a boost converter.

7. The system (100) of claim 1, **characterized in that** the first power source (105A) comprises a single battery cell, and the second power source (105B) comprises a plurality of battery cells connected in series.

8. The system (300 and 500) of claim 1, **characterized in that** the first power source (305A, 505A) comprises a rechargeable battery cell, and the second power source (305B, 505B) comprises an un-rechargeable battery cell.

9. The system (300, 400, 500) of claim 1, further **characterized by**:
a power selecting circuit (325, 425, 525), coupled to the first power source (305A, 405A, 505A) and the second power source (305B, 405B, 505B), for dynamically selecting one of the first and second power sources (305A, 405A, 505A, and 305B, 405B, 505B) to provide power for the at least one low/medium power operation.

10. The system (300, 400, 500) of claim 9, **characterized in that** the power selecting circuit (325, 425, 525) is arranged for dynamically selecting the other one of the first and second power sources (305A, 405A, 505A, and 305B, 405B, 505B) to provide power for the at least one high power operation.

11. A system (200, 300, 400, 500) consuming energy provided from a battery (205, 305, 405, 505) including a first power source (205A, 305A, 405A, 505A) and a second power source (205B, 305B, 405B, 505B), **characterized by**:
a power selecting circuit (225, 325, 425, 525), coupled to the battery (205, 305, 405, 505), for selecting one of the first and second power sources (205A, 305A, 405A, 505A, and 205B, 305B, 405B, 505B) to provide power for at least one low/medium power operation, and selecting the other one of the first and second power sources (205A, 305A, 405A, 505A, and 205B, 305B, 405B, 505B) to provide power for at least one high power operation;
wherein the first power source (205A, 305A, 405A, 505A) and the second power source (205B, 305B, 405B, 505B) are used for supplying the system (200, 300, 400, 500) simultaneously.

12. The system (200, 300, 400, 500) of claim 11, **characterized in that** the power selecting circuit (225, 325, 425, 525) is arranged to dynamically select one of the first and second power sources (205A, 305A, 405A, 505A, and 205B, 305B, 405B, 505B) to be charged by an external adaptor.

13. A method applied to a system (100, 300, 400, 500) consuming energy provided from a battery (105, 305, 405, 505) including a first power source (105A, 305A, 405A, 505A) and a second power source (105B, 305B, 405B, 505B), **characterized by**:
using the first power source (105A, 305A, 405A, 505A) to provide power for at least one high power operation that instantaneously consumes high power;
using the second power source (105B, 305B, 405B, 505B) to provide power for at least one low/medium power operation that does not consume high dynamic power; and
transferring power of at least one of the first and second power sources (105A, 305A, 405A, 505A, and 105B, 305B, 405B, 505B) to the other of the first and second power sources (105A, 305A, 405A, 505A, and 105B, 305B, 405B, 505B);
wherein the first power source (105A, 305A, 405A, 505A) and the second power source (105B, 305B, 405B, 505B) are used for supplying the system (100, 300, 400, 500) simultaneously.

14. A method applied to a system (200, 300, 400, 500) consuming energy provided from a battery (205, 305, 405, 505) including a first power source (205A, 305A, 405A, 505A) and a second power source (205B, 305B, 405B, 505B), **characterized by**:
selecting one of the first and second power sources (205A, 305A, 405A, 505A, and 205B, 305B, 405B, 505B) to provide power for at least one low/medium power operation; and
selecting the other one of the first and second power sources (205A, 305A, 405A, 505A, and 205B, 305B, 405B, 505B) to provide power for at least one high power operation;
wherein the first power source (205A, 305A, 405A, 505A) and the second power source (205B, 305B, 405B, 505B) are used for supplying the system (200, 300, 400, 500) simultaneously.

15. A battery (105, 205, 305, 405, 505) for providing energy for a system (100, 200, 300, 400, 500), **characterized by**:
a first power source (105A, 205A, 305A, 405A, 505A), for providing power for at least one high power operation that instantaneously consumes high power; and
a second power source (105B, 205B, 305B, 405B, 505B), coupled to the first power source (105A, 205A, 305A, 405A, 505A), for providing power for at least one low/medium power operation that does not instantaneously consume high dynamic power;
wherein the first power source (105A, 205A, 305A, 405A, 505A) and the second power source (105B, 205B, 305B, 405B, 505B) are supplying power for the system (100, 200, 300, 400, 500) simultaneously.
